# EUROPÄISCHE PATENTSCHRIFT

(11) **EP 1 514 438 B1**
(45) Veröffentlichungstag und Bekanntmachung des Hinweises auf die Patenterteilung: **29.04.2009**
(21) Anmeldenummer: 02740175.1
(22) Anmeldetag: 19.06.2002
(51) Int. Cl.: H04W 4/12

(54) **NETZWERKBASIERTES SPRACH- UND DATEN-POSTDIENSTSYSTEM FÜR BREITBANDIGE MOBILFUNKNETZE**
NETWORK-BASED VOICE MAIL AND DATA MESSAGING SYSTEM FOR BROADBAND MOBILE RADIO NETWORKS
SYSTEME DE MESSAGERIE DE DONNEES ET VOCAL A BASE RESEAU DESTINE A DES RESEAUX DE COMMUNICATION MOBILE A BANDE LARGE

(43) Veröffentlichungstag der Anmeldung: 16.03.2005
(73) Patentinhaber: Swisscom AG, 3050 Bern (CH)
(72) Erfinder: SCHIRMACHER, Franck, CH-3673 Linden (CH); LAUPER, Eric, CH-3014 Bern (CH)
(74) Vertreter: P&TS Patents & Technology Surveys SA
(86) Internationale Anmeldenummer: PCT/CH2002/000333
(87) Internationale Veröffentlichungsnummer: WO 2004/002175

(56) Entgegenhaltungen:
- WO-A-01/74040
- WO-A-02/45445
- WO-A-99/66746
- US-A- 6 044 275
- US-B1- 6 181 928

## Beschreibung

### Technisches Gebiet

Die vorliegende Erfindung betrifft ein Verfahren, um eine Meldung, die von einem ersten Teilnehmer in einem netzwerkbasierten Sprach- und Daten-Postdienstsystem hinterlassen wurde, zu einem späteren Zeitpunkt an den besagten zweiten Mobilteilnehmer in einem breitbandigen Mobilfunknetzsystem weiterzuleiten und ein Netzwerkbasiertes Postdienstsystem für breitbandige Mobilfunknetze entsprechend dem Oberbegriff der unabhängigen Ansprüche.

### Stand der Technik

Netzwerkbasierte Postdienstsysteme für Mobilfunknetze sind an sich bereits bekannt und gehören zum Standard in der mobilen Kommunikation. Sie umfassen im allgemeinen einen Postdienstserver in der Infrastruktur des Mobilfunknetzes, in welchem Anrufer, die einen momentan unerreichbaren Mobilfunkteilnehmer erreichen wollen, eine Nachricht (zum Beispiel eine Sprachmeldung) in einer sogenannten Sprachbox hinterlassen können. Der erwünschte Teilnehmer wird jeweils informiert, wenn eine an ihn gerichtete Nachricht in seiner Sprachbox eintrifft. Die Benachrichtigung erfolgt beispielsweise durch eine SMS- oder E-Mail-Meldung oder durch andere optische und/oder andere Signale (z.B. MWI, Pager, Anruf vom Postdienstsystem). Der angerufene Teilnehmer hat dann die Möglichkeit, die hinterlassene Meldung abzuholen und anzuhören.

Solche Systeme werden oft mit dem englischen Begriff Voice Mail System bezeichnet und werden vor allem eingesetzt, um Sprachmeldungen zu hinterlassen, wenn eine bidirektionale Sprachverbindung mit dem gewünschten Teilnehmer nicht aufgebaut werden kann. In der Tat wurden bestehende analoge und digitale Mobilfunksysteme (zum Beispiel das erfolgreiche GSM-System) vor allem für den Sprachverkehr konzipiert. Es gibt jedoch auch Postdienstsysteme, die auch Fax-Nachrichten verarbeiten können. Daten können in GSM-Netzwerken mit einer maximalen Geschwindigkeit von 9600 Bits/s übertragen werden, was die Übertragung von Grafiken und Tonsequenzen unattraktiv langsam und teuer macht. Das erfolgreiche SMS-System (Short Message System) erlaubt nur die zeitverzögerte Übertragung von Meldungen mit maximal 160 Zeichen (Buchstaben) pro Nachricht. Kürzlich aufgekommene Weiterentwicklungen der SMS-Technik verwenden lediglich eine Vielzahl von herkömmlichen SMS (Smart Messaging, EMS, ...), wobei sich das Mobilfunknetz nicht verändert.

Es sind jedoch auch schon modernere breitbandige digitale Mobilfunksysteme bekannt, mit welchen Daten wesentlich schneller übertragen werden können. Die Tabelle 1 zeigt die Datenübertragungsrate, die mit diesen neuen breitbandigen Mobilfunksystemen erreicht werden können:

**Tabelle 1**

| | |
|---|---|
| HSCSD (High Speed Circuit Switched Data) | 57.6 Kbit/s |
| GPRS-CS1 (General Packet Radio Service) | 72.0 Kbit/s |
| GPRS-CS2 | 107.2 Kbit/s |
| GPRS-CS3 | 124.8 Kbit/s |
| GPRS-CS4 | 171.2 Kbit/s |
| EDGE (Enhanced Data for GSM Evolution) | 384 Kbit/s |
| UMTS-Pikozone (Universal Mobile Telecommunication System) | 2000 Kbit/s |
| UMTS-Mikrozone | 384 Kbit/s |
| UMTS-Makrozone | 144 Kbit/s |

Man erwartet, dass durch diese modernen breitbandigen digitalen Mobilfunksysteme mehr Daten- als Sprachemeldungen übertragen werden. Es wird auch erwartet, dass in Zukunft mehr Mobilgeräte, (einschliesslich Mobiltelefone und PDA) als PC an das Internet angeschlossen werden. Mobilfunktelefone werden in der Zukunft zunehmend an Laptops, digitale Kameras und digitale Videokameras angeschlossen werden, um immer grössere Mengen an Daten in verschiedenen Formaten (einschliesslich Grafiken, Tonsequenzen und multimediale Daten) (in Echtzeit) zwischen verschiedenen Typen von Mobilterminals auszutauschen, wobei die Problematik der Datenformate nur teilweise gelöst wurde.

Teilnehmer wünschen oft, dass Ihre gesendeten Meldungen in Quasi-Echtzeit oder mit einer minimalen Zeitverzögerung bei dem angerufenen Teilnehmer ankommen. Allerdings sind nicht alle Mobilteilnehmer in der Lage, jede ankommende Meldung zu jedem Zeitpunkt zu empfangen. Mobilteilnehmer können Ihre Mobilgeräte ausschalten oder sich in einem nicht mit Hochgeschwindigkeitskanälen versorgten Bereich befinden. Viele Endgeräte können nicht mehrere Meldungen gleichzeitig empfangen. Ältere Endgeräte werden neuere Datenformate nicht verarbeiten können (z.B. vergleiche EMS-Format Problem).

Es wurden daher bereits neue netzwerkbasierte Postdienstsysteme entwickelt, die nicht nur Sprachmeldungen, sondern auch Fax- und andere Meldungen empfangen und in sogenannte Databoxes ablegen können (z.B. Unified Messaging Systeme). Diese Postdienstsysteme erlauben Anrufern die eine Sprachverbindung aufbauen oder Daten an den Teilnehmer senden wollen, Meldungen zu hinterlassen, wenn der gewünschte Empfänger nicht in der Lage ist, die Sprachverbindung zu beantworten oder die gesendete Meldung sofort zu empfangen.

Datenmeldungen, die an den gewünschten Teilnehmer weitergeleitet werden können werden aber sofort übertragen, ohne im Postdienstserver zwischengespeichert zu werden. Wenn der Datenempfang für den Empfänger kostenpflichtig ist, kann es allerdings sein, dass ankommende Meldungen unter gewissen Bedingungen unerwünscht sind (beispielsweise wenn sich der Teilnehmer in einem teureren besuchten Mobilfunknetz befindet oder in einem geographischen Gebiet, in welchem Daten nur mit einer niedrigen Datenübertragungsgeschwindigkeit übertragen werden können). Insbesondere grössere, unerwünschte Meldungen können das Mobilgerät des angerufenen Teilnehmers als auch den Teilnehmer selbst während einer unzumutbaren Dauer für andere Dienste blockieren. Während dieser Zeit kann der angerufene Teilnehmer möglicherweise weder neue Verbindungen aufbauen noch andere Meldungen empfangen (z.B. im GSM-Netz); ausserdem wird die Batterie seines Mobilterminals möglicherweise zu einem ungünstigen Zeitpunkt belastet.

Es werden demzufolge neue verbesserte Postdienstsysteme für Sprach- und Datenmeldungen benötigt, in welchen Datenmeldungen, die nicht sofort weitergeleitet werden können oder sollen, temporär abgelegt werden. Es werden ausserdem neue verbesserte Postdienstsysteme benötigt, die neue Formate von Sprach- und Daten-Meldungen effizienter verwalten und endgerätespezifisch überarbeitet weiterleiten können.

WO-A2-99/66746 beschreibt zum Beispiel ein System, in dem eine Meldung, die nicht direkt einem Empfänger in einem Mobilkommunikationsnetzwerk geliefert werden kann, temporär gespeichert wird. Die Bedingungen zur Weiterleitung der Meldung hängen aber nur von den Merkmalen der Meldung und des Mobilgeräts des Empfängers als.

WO-A1-02/45445 beschreibt ein System zum verzögerten Senden einer Datenmeldung zu einem mobilen Gerät. Es wird aber von keinem Postdienstsystem gesprochen, in welchem die einkommende Meldung hintergelassen wird, wenn sie nicht direkt empfangen werden kann.

WO-A2-01/74040 offenbart ein System, mit einer Vielzahl von mobilen Stationen von Abonnenten, die von einer Basisstation bedient werden. Sowohl die Basisstation als auch die mobile Station eines Abonnenten verfügt über die Möglichkeit, eine Sprachnachricht aufzunehmen. Wenn aber eine gewissen Brandbreite zwischen der Basisstation und mobiler Station nicht verfügbar ist, wird die Sprachnachricht an der Basisstation aufgenommen und an die mobile Station des Abonnenten erst übertragen, wenn die Bandbreite verfügbar ist. Das Mobilfunknetz zwischen der Basisstation und der mobilen Station kann beispielsweise ein GSM-Netz sein.

### Zusammenfassung der Erfindung

Die Erfindung hat demgemäss die Aufgabe, ein Verfahren und ein System zur Weiterleitung von Meldungen zu schaffen, die in einem Sprach- und Daten-Postdienstsystem hinterlassen wurden, mit welchen diese Weiterleitung in den optimalen momentanen Bedingungen insbesondere in den optimalen momentanen Empfangsbedingungen geschehen kann.

Erfindungsgemäss wird diese Aufgabe durch die Elemente der unabhängigen Ansprüche erreicht. Weitere vorteilhafte Ausführungsformen gehen ausserdem aus den abhängigen Ansprüchen und der Beschreibung hervor.

Insbesondere wird diese Aufgabe durch ein Verfahren und ein System entsprechend dem Oberbegriff der unabhängigen Ansprüche dadurch gelöst, dass das Mobilgerät des zweiten Mobilteilnehmers an einem Ort in ein bestimmtes Mobilfunknetz von verschiedenen möglichen Mobilfunknetzen, die jeweils unterschiedliche maximale Übertragungsgeschwindigkeiten aufweisen, eingeloggt ist und die vordefinierte Bedingungen mindestens eine der folgenden Bedingungen umfassen:
die mögliche Datenübertragungsgeschwindigkeit des Mobilfunknetzes, in das das Mobilgerät eingeloggt ist, ist höher als eine vordefinierte Geschwindigkeitsschwelle,
das vom zweiten Mobilteilnehmer verwendete Endgerät wird von einer externen Stromquelle elektrisch gespeist,
eine minimale Übertragungsqualität in dem Mobilfunknetz, in das das Mobilgerät eingeloggt ist, ist möglich,
eine gesicherte Datenübertragung ist möglich,
der Preis für die Übertragung der Meldung übersteigt eine vordefinierte Preisschwelle nicht und
die Dauer für die Übertragung der Meldung in dem Mobilfunknetz, in das das Mobilgerät eingeloggt ist, übersteigt eine vordefinierte Zeitschwelle nicht.

Dies hat den Vorteil, dass Meldungen im Postdienstsystem verbleiben, solange eine optimale Meldungsübertragung nicht möglich ist, und dies auch wenn eine sofortige Weiterleitung theoretisch möglich wäre. Auf diese Weise können Teilnehmer beispielsweise definieren, dass grössere Meldungen nur dann übertragen werden sollen, wenn der Teilnehmer in einem schnellen (oder in einem billigen) Netz eingeloggt ist. Andere Teilnehmer können angeben, dass sie vertrauliche Meldungen nur dann empfangen wollen, wenn sie einem gesicherten Netz (zum Beispiel in ihrem Firmen-Wireless-Netz) angeschlossen sind.

### Kurze Beschreibung der Figuren

Bevorzugte Ausführungsbeispiele der Erfindung werden nun anhand der beigelegten Figuren näher beschrieben. Es zeigen:
- Fig. 1: eine schematische Darstellung der Kommunikationswege in einem erfindungsgemässen System und
- Fig. 2: eine schematische Darstellung einer ersten Position eines Teilnehmers entlang einer Trajektorie durch ein geographisches Gebiet, das durch verschiedene Mobiltelekommunikationssysteme versorgt wird.
- Fig. 3: eine schematische Darstellung einer zweiten Position eines Teilnehmers entlang einer Trajektorie durch ein geographisches Gebiet, das durch verschiedene Mobiltelekommunikationssysteme versorgt wird.
- Fig. 4: eine schematische Darstellung einer dritten Position eines Teilnehmers entlang einer Trajektorie durch ein geographisches Gebiet, das durch verschiedene Mobiltelekommunikationssysteme versorgt wird.

### Wege zur Ausführung der Erfindung

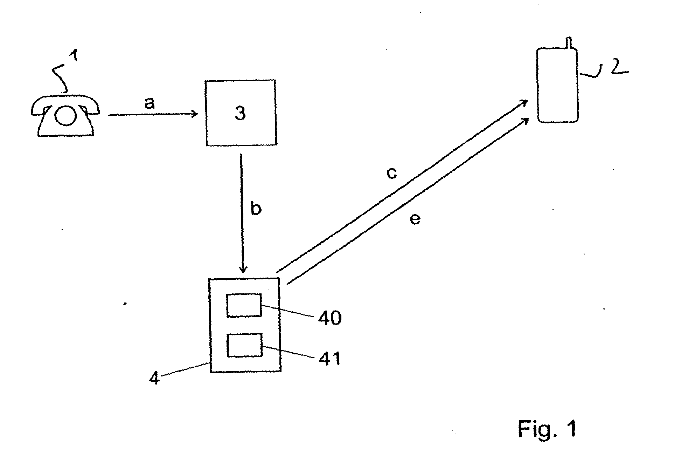

Die Figur 1 zeigt ein Telekommunikationssystem mit einem anrufenden Teilnehmer 1 und einem angerufenen Mobilteilnehmer 2. Der Pfeil a zeigt einen Kommunikationsversuch des anrufenden Teilnehmers 1 mit dem angerufenen Mobilteilnehmer 2. Der Kommunikationsversuch kann beispielsweise aus einem Versuch bestehen, eine bidirektionale Sprach- oder Datenverbindung zwischen den beiden Teilnehmern 1 und 2 herzustellen. In einer Variante kann dieser Kommunikationsversuch nur die Sendung einer einmaligen Meldung umfassen (beispielsweise ein SMS, ein MMS, ein E-Mail oder irgendeinen anderen digitalen Meldungstyp), ohne dass anschliessend ein Sprach- oder Datenkommunikationskanal eröffnet werden soll.

Der Kommunikationsversuch wird durch eine Vermittlungsstelle 3 geführt. Im Fall eines Verbindungsaufbaus durch ein öffentliches Fernsprechnetz (PSTN, Public Switched Telephone Network) besteht die Vermittlungsstelle aus einem Switch (beispielsweise aus einem SSP (Service Switching Point)) eines intelligenten Netzwerks. Im Fall der Sendung einer einmaligen Datenmeldung besteht die Vermittlungsstelle aus einem Meldungsbearbeitungsserver (zum Beispiel ein SMSC (Short Message Service Center) im Fall einer SMS-Meldung).

In manchen Fällen kann die gewünschte Kommunikation nicht erfolgen, oder zumindest nicht zu den vom angerufenen Teilnehmer 2 gewünschten Bedingungen. Folgende Gründe können beispielsweise den sofortigen Aufbau der gewünschten Kommunikation oder die Weiterleitung der Meldung verhindern:
Das Endgerät des angerufenen Teilnehmers 2 ist ausgeschaltet.
Der angerufene Teilnehmer ist besetzt.
Der angerufene Teilnehmer antwortet nicht.
Das Endgerät des angerufenen Teilnehmers kann die gesendete Meldung nicht korrekt wiedergeben (z.B. wegen EMS- Format Problem oder Format-Incompatibilität).
Das Endgerät des angerufenen Teilnehmers befindet sich in einem besuchten Netz ohne Roamingabkommen für den Aufbau der gewünschten Kommunikation oder für die Weiterleitung der Meldung.
Das Endgerät des angerufenen Teilnehmers befindet sich in einem Netz, in welchem der angerufene Teilnehmer die Meldung nicht empfangen will.
Andere vom Teilnehmer angegebenen Bedingungen für die sofortige Weiterleitung von Meldungen sind momentan nicht erfüllt. Beispiel: die erreichbare Datenübertragungsgeschwindigkeit liegt unter einer vordefinierten Schwelle.
usw.

Wenn die gewünschte Kommunikation nicht stattfinden kann, wird der anrufende Teilnehmer 1 automatisch mit dem netzwerkbasierten Sprach- und Daten-Postdienstsystem 4 verbunden (Pfeil b). Falls der anrufende Teilnehmer 1 eine bidirektionale Sprach- oder Datenverbindung aufbauen wollte, hat er dann stattdessen die Möglichkeit, dem angerufenen Teilnehmer eine Meldung in einer Meldungsdatenbank 40 im Postdienstsystem 4 zu hinterlassen. Die Meldung kann beispielsweise eine Sprachmeldung sein, könnte aber auch Grafikelemente; Ton und andere Multimediale-Elemente umfassen (z.B. EMS, MMS).

Falls der Kommunikationsversuch aus der Sendung einer Datenmeldung besteht, die nicht an den Teilnehmer 2 geleitet werden kann oder soll, wird diese Meldung temporär im Postdienstsystem 4 abgelegt.

Das Postdienstsystem 4 der Erfindung umfasst vorzugsweise eine Teilnehmer-Datenbank 41. In dieser Datenbank wird für jeden Teilnehmer 2 angegeben, unter welchen Bedingungen ankommende Meldungen sofort weitergeleitet oder vorerst im Postdienstsystem 4 abgelegt werden sollen (Kundeneinstellungen). Die Datenbank 41 definiert ausserdem für jeden Teilnehmer 2, ob und wie Benachrichtigungsmeldungen bei ankommenden Meldungen im Postdienstsystem 4 gesendet werden müssen.

Diese Bedingungen können von den Teilnehmern beispielsweise über eine passwortgeschützte Internetseite aktualisiert oder geändert werden. Als Variante kann auch der Betreiber des Postdienstsystems 4, z.B. ein Kundenberatungszentrum oder eine Hotline, vordefinierte Bedingungen angeben.

In einer bevorzugten Ausführungsform der Erfindung wird eine Benachrichtigungsmeldung an den angerufenen Teilnehmer 2 gesendet (Pfeil c), sobald eine an ihn gerichtete Meldung im Postdienstsystem 4 hinterlegt wurde. In einer Variante wird der Teilnehmer 2 erst dann von der Hinterlegung einer Meldung informiert, wenn die Erfordernisse für die Weiterleitung der Meldung an sein Endgerät erfüllt sind. Die Benachrichtigungsmeldung kann beispielsweise eine SMS-, MMS-, USSD-, Pager oder E-Mail-Meldung sein, die automatisch vom Postdienstsystem 4 ausgelöst und an das Endgerät des Teilnehmers 2 gesendet wird. Weiter wären auch Anrufe vom System oder Signallämpchen in einem Fixnetz (sogenannte Message Waiting Indicators) denkbar.

In einer bevorzugten Variante umfasst die Benachrichtigungsmeldung eine Zusammenfassung der im benannten Postdienstsystem hinterlassenen Meldung. Im Falle einer Meldung mit einer Grafik, umfasst die benannte Zusammenfassung der Benachrichtigungsmeldung eine komprimiertere Version oder ein Icon dieser benannten Grafik. Die Benachrichtigungsmeldung kann auch die Grösse, die geplante Übertragungsdauer, ein Hinweis auf Format, den Namen und den Namen des Senders der hinterlassenen Meldung umfassen. In einer bevorzugten Variante umfasst diese Benachrichtigungsmeldung auch den Preis für die Übertragung der im Postdienstsystem 4 hinterlassenen Meldung.

Die im Postdienstsystem 4 vom Teilnehmer 1 hinterlegte Meldung kann dann zu einem späteren günstigeren Zeitpunkt vom angerufenen Teilnehmer 2 abgeholt werden. In einer ersten Variante der Erfindung sendet der Teilnehmer 2 eine Meldung an das Postdienstsystem 4, sobald er bereit oder willens ist, die hinterlassene Meldung zu empfangen. In diesem Fall wird die Berechtigung des Teilnehmers geprüft und bei erfolgreicher Prüfung wird ihm die Meldung gesendet. In einer anderen Variante wird die Meldung automatisch an ihn gepusht, sobald das Postdienstsystem 4 von der Netzwerkinfrastruktur informiert wurde, dass der Teilnehmer 2 jetzt in der Lage ist, die Meldung zu den gewünschten Bedingungen zu empfangen (Pfeil e). Diese vollautomatische Weiterleitung kann zum Beispiel mit einem "Retry"-Verfahren durchgeführt werden, die z. B. bei E-Mail-Servern oder beim SMSC möglich sind. In einer bevorzugten Variante der Erfindung verbleiben die Datenmeldungen zumindest bis zu einer erfolgreichen Weiterleitung der Meldung an den Teilnehmer 2 im Postdienstsystem 4. Eine dauerhafte Speicherung in einem z.B. Unified Messaging System ist ebenfalls denkbar. Dies erhöht die Zuverlässigkeit des Verfahrens, weil eine Meldung wiederholt an ein Endgerät gesendet werden kann.

Die Tabelle 2 zeigt Beispiele von Bedingungen, die von den Teilnehmern in der Datenbank 41 abgelegt werden können, um zu definieren; wann sie ankommende Meldungen empfangen möchten:

**Tabelle 2**

| | |
|---|---|
| Ankommende Meldung | Weiterleitung |
| Grösse der Meldung <50 Kbits | sofort |
| 50Kbits < Grösse der Meldung < 250Kbits | Nur wenn die Datenübertragungsgeschwindigkeit >72 Kbits/s ist (GPRS, EDGE, UMTS oder WLAN) |
| 250Kbits < Grösse der Meldung | Nur wenn die Datenübertragungsgeschwindigkeit >1442 Kbits/s ist (GPRS-CS4, EDGE, UMTS oder WLAN) |
| Als vertraulich markierte | Nur wenn im privaten oder Firmen-WLAN angeschlossen. |
| Mit CGA-Grafiken | Nur wenn der Teilnehmer mit einem Endgerät eingeloggt ist, das über eine Farbanzeige verfügt |

Für jeden Teilnehmer können in der Datenbank 41 andere Datenübertragungsschwellen definiert werden. Diese Schwellen können auch implizit in der Datenbank enthalten sein: in einfachen Systemen kann der Teilnehmer zum Beispiel einfach eingeben, dass er Meldungen erst dann empfangen will, wenn er in einem z.B. GPRS-Netz, oder in seinem Firmennetz eingeloggt ist.

Andere Bedingungen können ebenso definiert werden. In einem Netz, in welchem sogenannte Quality of Services (Dienstqualitäten, QoS) definiert sind, können Teilnehmer eine Mindest-Dienstqualität für mindestens gewisse Meldungen verlangen. Teilnehmer können auch verlangen, dass gewisse Meldungen (beispielsweise Meldungen von bestimmten Sendern 1) nur dann übermittelt werden, wenn eine gesicherte und/oder vertrauliche Datenübertragung möglich ist. Auch Preisangaben können definiert werden: in diesem Fall können Teilnehmer 2 verlangen, dass Meldungen solange im Postdienstsystem bleiben, bis der Preis für deren Weiterleitung bis zum Teilnehmer tiefer als eine vordefinierte Schwelle ist. Als Variante können Teilnehmer verlangen, dass die Dauer für die Übertragung der Meldung eine vordefinierte Schwelle nicht übersteigen soll. Die Schwellen für den Preis, die Geschwindigkeit und die Dauer der Übertragung können (vorzugsweise abhängig von der Grösse der Meldung, vom Sender der Meldung oder von anderen Eigenschaften der Meldung) definiert werden. Erlaubte Zeitfenster können angegeben werden: ein Mobilteilnehmer wird dann beispielsweise definieren, dass er bestimmte Meldungen nur während der Arbeitszeit empfangen will. Geographische Bedingungen sind ebenfalls möglich: ein Teilnehmer könnte zum Beispiel wünschen, dass grössere Meldungen entweder Zuhause oder im Büro empfangen werden sollen, aber nicht unterwegs. Location Based Services Einrichtungen können dabei eingesetzt werden. Auch kombinierte Bedingungen können definiert werden. Ausserdem werden manche Teilnehmer wünschen, Meldungen erst dann zu empfangen, wenn das verwendete Endgerät von einer externen Stromquelle elektrisch gespeist wird.

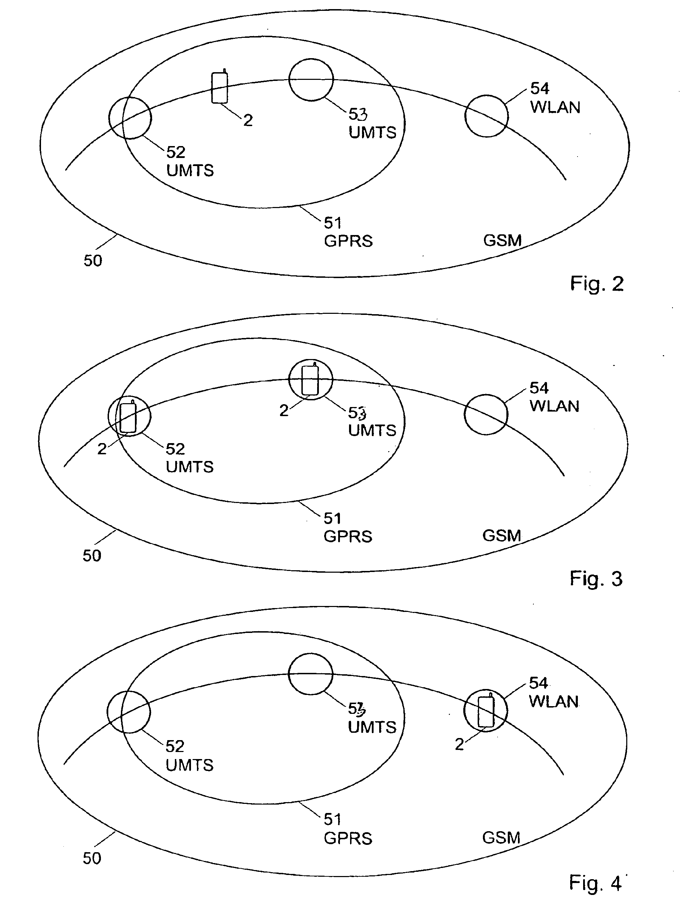

Die Figuren 2 bis 4 zeigen eine schematische Darstellung der Trajektorie eines Teilnehmers 2 durch ein geographisches Gebiet, das von verschiedenen Mobiltelekommunikationssystemen versorgt wird. Das dargestellte Gebiet wird von einem GSM-Mobilfunknetz 50 versorgt. Ein kleinerer Teil dieses Gebiets wird von einem GPRS-Mobilfunknetz 51 versorgt. Einzelne Bereiche (zum Beispiel Städte) werden ausserdem von UMTS-Mobilfunknetzen 52, 53 versorgt. Der Mobilteilnehmer kann sich ausserdem in einem kleineren privaten Firmennetz 54 befinden (zum Beispiel in einem Wireless-LAN gemäss 802.11 b oder Bluetooth). Das Mobilgerät des Mobilteilnehmers 2 ist multimodal und kann sich jeweils in dem am schnellsten verfügbaren Netz einloggen. Durch Roamingabkommen zwischen den Betreibern der verschiedenen Netze werden ankommende Meldungen jeweils an das Netz geleitet, in welchem der Mobilteilnehmer gerade eingeloggt ist.

In der Figur 2 befindet sich der Teilnehmer 2 in einem Gebiet, das durch ein GSM-Netz 50 und zusätzlich durch ein GPRS-Netz 51 versorgt wird. Gemäss den in der Tabelle 2 angegebenen Bedingungen werden an diesen Ort nur Meldungen weitergeleitet, die kleiner als 250Kbits und nicht als vertraulich markiert sind. Meldungen, die diese Bedingungen nicht erfüllen, werden temporär im Postdienstssystem 4 hinterlegt; es wird sofort eine Benachrichtigungsmeldung (zum Beispiel ein SMS) gesendet, um den Teilnehmer 2 zu informieren, dass seine Meldung noch nicht weitergeleitet werden konnte. Auch der Absender der Meldung könnte informiert werden, dass die gesendete Meldung nicht in Echtzeit weitergeleitet wurde.

In der Figur 3 befindet sich der Teilnehmer 2 jetzt in einem Gebiet, das ausserdem durch ein UMTS-Netz 53 versorgt wird. Die bis jetzt im Postdienstsystem 4 hinterlegten Meldungen können von dort abgeholt werden oder werden automatisch weitergeleitet; neue Meldungen werden sofort an ihn geleitet. Gemäss den in Tabelle 2 angegebenen Bedingungen werden jedoch die vom Sender als vertraulich markierte Meldungen trotzdem im Postdienstsystem 4 temporär oder auch permanent (z.B. Unified Messaging System oder beliebige Email Server Systeme des Operators) abgelegt. Diese Meldungen können erst abgeholt werden, wenn der Teilnehmer in seinem Firmen-WLAN 54 eingeloggt ist (Figur 4).

Das Hinterlassen einer Meldung im Sprach- und Daten-Postdienstsystem 4 kann in einer Variante dem angerufenen Mobilteilnehmer 2 verrechnet werden. Der verrechnete Preis kann von der Ablagedauer und/oder von der Grösse der abgelegten Meldung abhängen.

Damit Meldungen nicht unnötig lange im Postdienstsystem aufbewahrt werden, nur weil beispielsweise das Endgerät des gewünschten Teilnehmers 2 das Format der Meldung nicht empfangen oder wiedergeben kann oder weil dieser Teilnehmer sich meistens in einem Netz befindet, in welchem die Übertragung dieser Meldung unmöglich oder unerwünscht ist, können Datenformatkonversionen im Postdienstsystem 4 und eventuell eine permanente Speicherung in der Eingangskorb eines z.B. Unified Messaging Systems durchgeführt werden. Der Meldungsformatkonvertierer kann beispielsweise SMS-, EMS-, MMS- oder E-Mail-Meldungen in jedes andere Meldungsformat in dieser Liste konvertieren. Ausserdem können im Postdienstsystem Bilddateienformate geändert und Meldungen komprimiert oder dekomprimiert werden. Weiter können aus Videomeldungen jeweils die Tonmeldungen herausgefiltert werden, um auch solche Meldungen an alte (legacy) Terminals ausliefern zu können.

Viele Benutzer verfügen jetzt schon über verschiedene SIM-Karten mit der gleichen Identifizierung IMSI (International Mobile Subscriber Identity). Eine Karte wird beispielsweise für das Mobiltelefon verwendet, eine zweite für das Auto, eine dritte für das Modem im Laptop, usw. Alle Karten antworten auf dieselbe Telefonnummer; zu jedem Zeitpunkt ist jedoch immer nur eine Karte aktiv. Die verschiedenen Geräte, in welche die SIM-Karten eingesetzt sind, können verschiedene Eigenschaften haben. Als typisches Beispiel könnte ein Teilnehmer ein GSM-Mobiltelefon und ein schnelleres GPRS, WLAN oder UMTS-fähiges Laptop oder PDA verwenden. Mit dem erfindungsgemässen Verfahren kann einfach in der Infrastruktur des Netzes angegeben werden, dass grosse Meldungen nur an das schnellste Endgerät weitergeleitet werden und nur wenn dieses Endgerät in einem schnellen Netz aktiviert ist. Erfindungsgemäss ist das Netzwerk vorzugsweise in die Lage, zu jedem Zeitpunkt den eingesetzten

Endgerätetyp zu kennen bzw. zu erkennen. Dies erlaubt zum Beispiel einem Teilnehmer, SMS oder andere Kurzmeldungen jeweils mit dem momentan aktiven Mobilgerät zu empfangen, während grössere Meldungen im Postdienstsystem warten, bis der Teilnehmer wieder sein Laptop oder ein anderes schnelles Terminal aktiviert.

### Bezugszeichenliste

- 1: Teilnehmer
- 2: Mobilteilnehmer
- 3: Vermittlungsstelle
- 4: Postdienstsystem
- 40: Meldungsdatenbank
- 41: Teilnehmer-Datenbank
- 50: GSM-Mobilfunknetz
- 51: GPRS-Mobilfunknetz
- 52: UMTS-Mobilfunknetz
- 53: UMTS-Mobilfunknetz
- 54: Firmennetz, WLAN

- a: Kommunikationsversuch des Teilnehmers 1
- b: Verbinden mit dem Postdienstsystem 4
- c: Benachrichtigungsmeldung
- e: Pushen der Meldung

## Patentansprüche

1. Verfahren, um eine Meldung, die von einem ersten Teilnehmer (1) in einer Meldungsdatenbank (40) eines netzwerkbasierten Sprach- und Daten-Postdienstsystem (4) für einen Mobilteilnehmer (2) hinterlassen wurde, wenn eine Kommunikation mit einem Mobilgerät des Mobilteilnehmers (2) nicht oder nicht zu den gewünschten Bedingungen des Mobilteilnehmers (2) erfolgen kann, zu einem späteren Zeitpunkt an den besagten zweiten Mobilteilnehmer (2) in einem breitbandigen Mobilfunknetzsystem weiterzuleiten, wobei die benannte Meldung in der benannten Meldungsdatenbank (40) des Postdienstsystems (4) bleibt, solange vordefinierte Bedingungen für deren Weiterleitung nicht erfüllt sind, selbst wenn eine sofortige Weiterleitung der benannten Meldung möglich wäre,
**dadurch gekennzeichnet, dass** das Mobilgerät des zweiten Mobilteilnehmers (2) an einem Ort in ein bestimmtes Mobilfunknetz von verschiedenen möglichen Mobilfunknetzen, die jeweils unterschiedliche maximale Übertragungsgeschwindigkeiten aufweisen, eingeloggt ist und besagte vordefinierte Bedingungen mindestens eine der folgenden Bedingungen umfassen:
die mögliche Datenübertragungsgeschwindigkeit des Mobilfunknetzes, in das das Mobilgerät eingeloggt ist, ist höher als eine vordefinierte Geschwindigkeitsschwelle,
das vom benannten zweiten Mobilteilnehmer (2) verwendete Endgerät wird von einer externen Stromquelle elektrisch gespeist,
eine minimale Übertragungsqualität in dem Mobilfunknetz, in das das Mobilgerät eingeloggt ist, ist möglich,
eine gesicherte Datenübertragung ist möglich,
der Preis für die Übertragung der Meldung übersteigt eine vordefinierte Preisschwelle nicht und
die Dauer für die Übertragung der Meldung in dem Mobilfunknetz, in das das Mobilgerät eingeloggt ist, übersteigt eine vordefinierte Zeitschwelle nicht.

2. Das Verfahren des Anspruchs 1, in welchem sich das Mobilgerät jeweils in das schnellste verfügbare Mobilfunknetz einloggt.

3. Das Verfahren des Anspruchs 1 oder 2, in welchem die benannte Meldung ohne Intervention des benannten ersten Teilnehmers (1) oder des benannten zweiten Mobilteilnehmers (2) weitergeleitet wird, sobald die benannte mindestens eine Bedingung erfüllt ist.

4. Das Verfahren eines der Ansprüche 1 bis 3, in welchem die benannten vordefinierten Bedingungen vom benannten zweiten Mobilteilnehmer (2) definiert wurden.

5. Das Verfahren eines der Ansprüche 1 bis 4, in welchem die benannte Meldung erst dann weitergeleitet wird, wenn sich der benannte zweite Mobilteilnehmer (2) in einem geographischen Gebiet befindet, das von einem Mobilfunknetz versorgt wird, das eine Datenübertragungsgeschwindigkeit erlaubt, die höher ist als die benannte GeschwindigkeitsSchwelle.

6. Das Verfahren eines der Ansprüche 1 bis 5, in welchem die benannte Meldung erst dann weitergeleitet wird, wenn sich der benannte zweite Mobilteilnehmer (2) mit einem Endgerät im benannten Netz einloggt, mit welchem eine höhere Übertragungsgeschwindigkeit möglich ist als die benannte Geschwindigkeitsschwelle.

7. Das Verfahren eines der Ansprüche 1 bis 6, in welchem die benannte Meldung erst dann weitergeleitet wird, wenn eine minimale Vertraulichkeit der Übertragung möglich ist.

8. Das Verfahren eines der Ansprüche 1 bis 7, in welchem die benannten vordefinierten Bedingungen von der Grösse der benannten Meldung abhängig sind.

9. Das Verfahren eines der Ansprüche 1 bis 8, in welchem der benannte zweite Mobilteilnehmer (1) von der Hinterlassung der benannten Meldung im benannten Postdienstsystem (4) informiert wird.

10. Das Verfahren eines der Ansprüche 1 bis 9, in welchem der benannte zweite Mobilteilnehmer (2) erst dann von der Hinterlassung der benannten Meldung im benannten Postdienstsystem (4) informiert wird, wenn die benannte Geschwindigkeitsschwelle möglich ist, damit er dann aktiv die benannte Meldung abholen kann.

11. Das Verfahren eines der Ansprüche 9 oder 10, in welchem der benannte zweite Mobilteilnehmer (2) von der Hinterlassung der benannten Meldung im benannten Postdienstsystem (4) durch eine SMS-, EMS-, MMS-, USSD-, Pager- oder E-Mail-Benachrichtigungsmeldung informiert wird.

12. Das Verfahren des Anspruchs 11, in welchem die benannte Benachrichtigungsmeldung eine Zusammenfassung der im benannten Postdienstsystem (4) hinterlassenen Meldung enthält.

13. Das Verfahren des Anspruchs 12, in welchem die benannte Meldung eine Grafik umfasst und in welchem die benannte Benachrichtigungsmeldung eine komprimierte Version der benannten Grafik umfasst.

14. Das Verfahren eines der Ansprüche 9 bis 13, in welchem die benannte Benachrichtigungsmeldung die zu erwartende Übertragungsdauer und/oder Übertragungspreis enthält.

15. Das Verfahren eines der Ansprüche 1 bis 14, in welchem das Hinterlassen der benannten Meldung im benannten Sprach- und Daten-Postdienstsystem (4) dem benannten zweiten Mobilteilnehmer (2) abhängig von der Ablagedauer und/oder der Grösse der abgelegten Meldung verrechnet wird.

16. Das Verfahren eines der Ansprüche 1 bis 15, in welchem das Format der benannten Meldung im benannten Sprach- und Daten-Postdienstsystem (4) in Abhängigkeit des vom benannten zweiten Mobilteilnehmers verwendeten Endgeräts, des geographischen Standorts des benannten zweiten Mobilteilnehmers und/oder der Bedingungen des benannten zweiten Mobilteilnehmers konvertiert wird.

17. Postdienstsystem (4) für ein breitbandiges Mobilfunknetzsystem, mit einer Teilnehmerdatenbank (41), in welcher für mindestens gewisse Mobilteilnehmer (2) individuelle Bedingungen angegeben sind, die erfüllt werden müssen, damit in einer Meldungsdatenbank (40) des benannten Postdienstsystems (4) hinterlassene Meldungen an ein Mobilgerät des Mobilteilnehmers (2) weitergeleitet werden,
**dadurch gekennzeichnet, dass** das Mobilgerät des Mobilteilnehmers (2) an einem Ort in ein bestimmtes Mobilfunknetz von verschiedenen möglichen Mobilfunknetzen, die jeweils unterschiedliche maximale Übertragungsgeschwindigkeiten aufweisen, eingeloggt ist und die benannte Bedingungen mindestens eine der folgenden Bedingungen umfassen:
die mögliche Datenübertragungsgeschwindigkeit des bestimmten Mobilfunknetzes, in das das Mobilgerät eingeloggt ist, ist höher als eine vordefinierte Geschwindigkeitsschwelle,
das vom benannten zweiten Mobilteilnehmer (2) verwendete Endgerät wird von einer externen Stromquelle elektrisch gespeist,
eine minimale Übertragungsqualität in dem bestimmten Mobilfunknetz, in das das Mobilgerät eingeloggt ist, ist möglich,
eine gesicherte Datenübertragung ist möglich,
der Preis für die Übertragung der Meldung übersteigt eine vordefinierte Preisschwelle nicht und
die Dauer für die Übertragung der Meldung in dem bestimmten Mobilfunknetz, in das das Mobilgerät eingeloggt ist, übersteigt eine vordefinierte Zeitschwelle nicht.

18. Postdienstsystem (4) gemäss dem Anspruch 17, in welchem das Mobilgerät jeweils in das schnellste verfügbare Mobilfunknetz einloggt ist.

## Claims

1. Method for forwarding at a later point in time a message left by a first subscriber (1) in a message database (40) of a network-based voice mail and data messaging system (4) for a mobile subscriber (2), if communication with a mobile device of the mobile subscriber (2) cannot take place or not at the desired conditions of the mobile subscriber (2), to said second mobile subscriber (2) in a broadband mobile radio network, wherein said message remains in said message database (40) of the messaging system (4) as long as predetermined conditions for its forwarding have not been fulfilled, even if an immediate forwarding of said message were possible,
**characterized in that** the mobile device of the second mobile subscriber (2) is logged at one location into one certain mobile radio network out of different possible mobile radio networks that each have different maximum transmission speeds and said predefined conditions include at least one of the following conditions:
the possible data transmission speed of the mobile radio network into which the mobile device is logged is higher than a predefined speed threshold,
the terminal used by said second mobile subscriber (2) is electrically fed by an external current source,
a minimal transmission quality in the mobile radio network into which the mobile device is logged is possible,
a secured data transmission is possible,
the price for a transmission of the message does not exceed a predefined price threshold, and
the duration for the transmission of the message in the mobile radio network into which the mobile device is logged does not exceed a predefined time threshold.

2. The method of claim 1, wherein the mobile device in each case logs into the fastest available mobile radio network.

3. The method of claim 1 or 2, wherein said message is forwarded without intervention from said first subscriber (1) or from said second mobile subscriber (2) as soon as said at least one condition is fulfilled.

4. The method of one of the claims 1 to 3, wherein said predefined conditions have been defined by said second mobile subscriber (2).

5. The method of one of the claims 1 to 4, wherein said message is only forwarded when said second mobile subscriber (2) finds himself in a geographical area that is served by a mobile radio network that allows a data transmission speed that is higher than said speed threshold.

6. The method of one of the claims 1 to 5, wherein said message is only forwarded when said second mobile subscriber (2) is logged with a terminal into said network with which a higher transmission speed is possible than said speed threshold.

7. The method of one of the claims 1 to 6, wherein said message is only forwarded when a minimum confidentiality of the transmission is possible.

8. The method of one of the claims 1 to 7, wherein said predefined conditions depend on the size of said message.

9. The method of one of the claims 1 to 8, wherein said second mobile subscriber (1) is notified about said message being left in said messaging system (4).

10. The method of one of the claims 1 to 9, wherein said second mobile subscriber (2) is notified about said message being left in said messaging system (4) only when said speed threshold is possible, so that he can then actively retrieve said message.

11. The method of one of the claims 9 or 10, wherein said second mobile subscriber (2) is alerted about said message being left in said messaging system (4) by an SMS, EMS, MMS, USSD, pager or email notification message.

12. The method of claim 11, wherein said notification message contains a summary of the message left in said messaging system (4).

13. The method of claim 12, wherein said message includes graphics and wherein said notification message contains a compressed version of said graphics.

14. The method of one of the claims 9 to 13, wherein said notification message contains the expected transmission duration and/or price.

15. The method of one of the claims 1 to 14, wherein leaving said message in said voice mail and data messaging system (4) is billed to said second mobile subscriber (2) depending on the storage duration and/or the size of the stored message.

16. The method of one of the claims 1 to 15, wherein the format of said message in said voice mail and data messaging system (4) is converted depending on the terminal used by said second mobile subscriber, on the geographic location of said second mobile subscriber and/or on the conditions of said second mobile subscriber.

17. Messaging system (4) for a broadband mobile radio network system, with a subscriber database (41) wherein for at least certain mobile subscribers (2) individual conditions are indicated that must be fulfilled in order for messages left in a message database (40) of said messaging system (4) to be forwarded to a mobile device of the mobile subscriber (2),
**characterized in that** the mobile device of the mobile subscriber (2) is logged at one location into one certain mobile radio network out of different possible mobile radio networks that each have different maximum transmission speeds and said conditions include at least one of the following conditions:
the possible data transmission speed of the mobile radio network into which the mobile device is logged is higher than a predefined speed threshold,
the terminal used by said second mobile subscriber (2) is electrically fed by an external current source,
a minimal transmission quality in the mobile radio network into which the mobile device is logged is possible,
a secured data transmission is possible,
the price for a transmission of the message does not exceed a predefined price threshold, and
the duration for the transmission of the message in the mobile radio network into which the mobile device is logged does not exceed a predefined time threshold.

18. Messaging system (4) according to claim 17, wherein the mobile device is each time logged into the fastest available mobile radio network.

## Revendications

1. Procédé pour acheminer ultérieurement un message laissé par un premier abonné (1) dans une base de messages (40) d'un système de messagerie vocal et de données (4) pour un abonné mobile (2) lorsqu'une communication avec un appareil mobile de l'abonné mobile (2) n'est pas possible ou ne l'est pas aux conditions souhaitées par l'abonné mobile (2) audit deuxième abonné mobile (2) dans un réseau de communication mobile à bande large, ledit message restant dans ladite base de messages (40) du système de messagerie (4) aussi longtemps que les conditions prédéfinies pour son acheminement ne sont pas remplies, même si un acheminement immédiat dudit message était possible,
**caractérisé en ce que** l'appareil mobile du deuxième abonné mobile (2) à un emplacement est connecté dans un certain réseau de communication mobile parmi différents réseaux de communication mobiles qui possèdent chacun différentes vitesses maximales de transmission et lesdites conditions prédéfinies comprennent au moins une des conditions suivantes:
la vitesse possible de transmission de données du réseau de communication mobile auquel est connecté l'appareil mobile est plus élevé qu'un seuil de vitesse prédéfini,
le terminal utilisé par ledit deuxième abonné mobile (2) est alimenté électriquement par une source de courant externe,
une qualité de transmission minimale est possible dans le réseau de communication mobile auquel est connecté l'appareil mobile,
une transmission sécurisée des données est possible,
le prix pour la transmission du message n'excède pas un seuil de prix prédéfini, et
la durée de transmission du message dans le réseau de communication mobile auquel est connecté l'appareil mobile n'excède pas un seuil temporel prédéfini.

2. Le procédé de la revendication 1, dans lequel l'appareil mobile se connecte à chaque fois dans le réseau de communication mobile le plus rapide disponible.

3. Le procédé de la revendication 1 ou 2, dans lequel ledit message est acheminé sans intervention dudit premier abonné (1) ou dudit deuxième abonné mobile (2), dès que ladite au moins une condition est remplie.

4. Le procédé de l'une des revendications 1 à 3, dans lequel lesdites conditions prédéfinies ont été définies par ledit deuxième abonné mobile (2).

5. Le procédé de l'une des revendications 1 à 4, dans lequel ledit message est acheminé seulement lorsque ledit deuxième abonné mobile (2) se trouve dans un emplacement géographique qui est approvisionné par un réseau de communication mobile permettant une vitesse de transmission des données plus élevée que ledit seuil de vitesse.

6. Le procédé de l'une des revendications 1 à 5, dans lequel ledit message est acheminé seulement lorsque ledit deuxième abonné mobile (2) se connecte avec un terminal dans ledit réseau avec lequel une vitesse de transmission plus élevée est possible que ledit seuil de vitesse.

7. Le procédé de l'une des revendications 1 à 6, dans lequel ledit message est acheminé seulement lorsqu'une confidentialité minimale de la transmission est possible.

8. Le procédé de l'une des revendications 1 à 7, dans lequel lesdites conditions prédéfinies dépendent de la taille dudit message.

9. Le procédé de l'une des revendications 1 à 8, dans lequel ledit deuxième abonné mobile (1) est informé que ledit message a été laissé dans ledit système de messagerie (4).

10. Le procédé de l'une des revendications 1 à 9, dans lequel ledit deuxième abonné mobile (2) est informé que ledit message a été laissé dans ledit système de messagerie (4) seulement lorsque ledit seuil de vitesse est possible afin de lui permettre d'activement récupérer ledit message.

11. Le procédé de l'une des revendications 9 ou 10, dans lequel ledit deuxième abonné mobile (2) est informé que ledit message a été laissé dans ledit système de messagerie (4) par un message d'alerte par SMS, EMS, MMS, USSD, téléavertisseur ou email.

12. Le procédé de la revendication 11, dans lequel ledit message d'alerte contient un résumé du message laissé dans ledit système de messagerie (4).

13. Le procédé de la revendication 12, dans lequel ledit message comprend un graphisme et dans lequel ledit message d'alerte contient une version comprimée dudit graphisme.

14. Le procédé de l'une des revendications 9 à 13, dans lequel ledit message d'alerte contient la durée escomptée et/ou le prix escompté de la transmission.

15. Le procédé de l'une des revendications 1 à 14, dans lequel laisser ledit message dans ledit système de messagerie vocal et de données (4) est facturé audit deuxième abonné mobile (2) en fonction de la durée du stockage et/ou de la taille du message stocké.

16. Le procédé de l'une des revendications 1 à 15, dans lequel le format dudit message dans ledit système de messagerie vocal et de données (4) est converti en fonction du terminal utilisé par ledit deuxième abonné mobile, de l'emplacement géographique dudit deuxième abonné mobile et/ou des conditions dudit deuxième abonné mobile.

17. Système de messagerie (4) pour un réseau de communication mobile à bande large, avec une base d'abonnés (41) dans laquelle pour au moins certains abonnés mobiles (2) des conditions individuelles sont indiquées qui doivent être remplies afin que des messages laissés dans une base de messages (40) dudit système de messagerie (4) soient acheminés à un appareil mobile de l'abonné mobile (2),
**caractérisé en ce que** l'appareil mobile de l'abonné mobile (2) à un emplacement est connecté dans un certain réseau de communication mobile parmi différents réseaux de communication mobiles qui possèdent chacun différentes vitesses maximales de transmission et lesdites conditions comprennent au moins une des conditions suivantes:
la vitesse possible de transmission de données du réseau de communication mobile auquel est connecté l'appareil mobile est plus élevé qu'un seuil de vitesse prédéfini,
le terminal utilisé par ledit deuxième abonné mobile (2) est alimenté électriquement par une source de courant externe,
une qualité de transmission minimale est possible dans le réseau de communication mobile auquel est connecté l'appareil mobile,
une transmission sécurisée des données est possible,
le prix pour la transmission du message n'excède pas un seuil de prix prédéfini, et
la durée de transmission du message dans le réseau de communication mobile auquel est connecté l'appareil mobile n'excède pas un seuil temporel prédéfini.

18. Système de messagerie (4) selon la revendication 17, dans lequel l'appareil mobile se connecte à chaque fois dans le réseau de communication mobile le plus rapide disponible.
